# EUROPEAN PATENT APPLICATION

(11) **EP 2 275 484 A1**
(43) Date of publication of application: **19.01.2011**
(21) Application number: 10165907.6
(22) Date of filing: 15.06.2010
(51) Int. Cl.: C08L 23/08, G10K 11/162

(54) **Vibration-damping composition for high temperature, vibration-damping base material for high temperature, method for using the base material, vibration-damping sheet for high temperature, and method for using the sheet**

(30) Priority: 18.06.2009 JP 2009145672
(71) Applicant: NITTO DENKO CORPORATION, Ibaraki-shi, Osaka 567-8680 (JP)
(72) Inventor: Kawaguchi, Yasuhiko, Osaka 567-8680 (JP)
(74) Representative: Schwabe - Sandmair - Marx

(57) **Abstract**

A vibration-damping composition for high temperature includes a heat-fusion resin containing a first polymer having a melting point of a normal temperature or more, a tackifier, and a filler, wherein the heat-fusion resin has vibration-damping characteristics at a temperature around its melting point.

## Description

### BACKGROUND OF THE INVENTION

### Field of the Invention

The present invention relates to a vibration-damping composition for high temperature, a vibration-damping base material for high temperature, a method for using the base material, a vibration-damping sheet for high temperature, and a method for using the sheet.

### Description of the Related Art

Heretofore, a thin sheet has been used as a part of a component for automobiles and household electrical appliances, and upon operating the automobiles and the household electrical appliances, vibration sound of the thin sheet is generated. Therefore, to prevent the generation of such vibration sound, for example, there has been known that vibration-damping characteristics of a thin sheet is improved by bonding a vibration-damping sheet including a resin layer to the thin sheet.

Temperature of those thin sheets that are disposed in the proximity of an engine room of an automobile or a motor of a household electrical appliance easily becomes high, and therefore a vibration-damping sheet that is capable of developing vibration-damping effects even under a high temperature is desired.

For example, in order to obtain excellent vibration-damping properties under a high temperature of 40°C or more, there has been proposed a vibration-damping sheet made of a vibration-damping material for high temperature containing butyl rubber and C5 petroleum resin

### SUMMARY OF THE INVENTION

In the vibration-damping sheet described in Japanese Unexamined Patent Publication No. H9-136998, an improvement in vibration-damping characteristics under a normal temperature (about 20°C) and a high temperature (about 40°C) has been made.

However, although an improvement in vibration-damping characteristics under a normal temperature has been made in such a vibration-damping sheet, a further improvement in vibration-damping characteristics under a high temperature is desired.

An object of the present invention is to provide a vibration-damping composition for high temperature having further improved vibration-damping characteristics under high temperature, a vibration-damping base material for high temperature, a method for using the base material, a vibration-damping sheet for high temperature, and a method for using the sheet.

The vibration-damping composition for high temperature of the present invention includes a heat-fusion resin, the heat-fusion resin containing a first polymer having a melting point of a normal temperature or more, a tackifier, and a filler, wherein the heat-fusion resin has vibration-damping characteristics at a temperature around its melting point (the melting point inclusive).

In the vibration-damping composition for high temperature of the present invention, it is preferable that the first polymer is polyethylene and/or an ethylene copolymer.

In the vibration-damping composition for high temperature of the present invention, it is preferable that a temperature difference between the melting point of the first polymer and the softening temperature of the tackifier is 100°C or less.

In the vibration-damping composition for high temperature of the present invention, it is preferable that the heat-fusion resin further contains a second polymer having a glass transition temperature that is equal to or less than the melting point of the first polymer, and the heat-fusion resin has vibration-damping characteristics within a temperature range from the melting point of the first polymer to the glass transition temperature of the second polymer.

In the vibration-damping composition for high temperature of the present invention, it is preferable that a temperature difference between the melting point of the first polymer and the glass transition temperature of the second polymer is 30°C or more.

The vibration-damping base material for high temperature of the present invention is obtained by molding the vibration-damping composition for high temperature into a sheet.

The vibration-damping sheet for high temperature of the present invention includes the above-described vibration-damping base material for high temperature, and a constraining layer that is laminated onto one side of the vibration-damping base material for high temperature.

The method for using the vibration-damping base material for high temperature of the present invention includes heating the above-described vibration-damping base material for high temperature to the melting point of the heat-fusion resin or more so as to adhesively bond the vibration-damping base material for high temperature to a thin sheet.

The method for using the vibration-damping sheet for high temperature of the present invention includes heating the vibration-damping sheet for high temperature to the melting point of the heat-fusion resin or more so as to adhesively bond the vibration-damping sheet for high temperature to a thin sheet,

The vibration-damping composition for high temperature of the present invention has further improved vibration-damping characteristics under high temperature while achieving a lightweight.

Therefore, according to the method for using the vibration-damping base material for high temperature of the present invention, and the method for using the vibration-damping sheet for high temperature of the present invention, in which the vibration-damping base material for high temperature of the present invention obtained by molding the vibration-damping composition for high temperature of the present invention into a sheet, or the vibration-damping sheet for high temperature including the base material is adhesively bonded to a thin sheet, sufficient vibration damping can be achieved even if the thin sheet is used under a high temperature.

### Brief Description of the Drawings

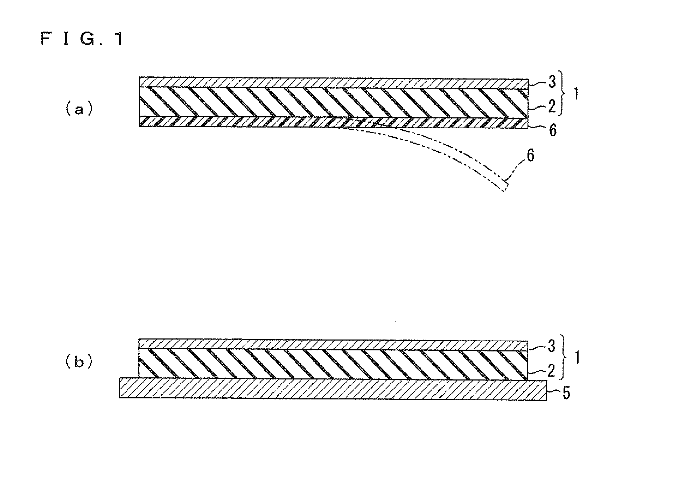

FIG. 1 is a diagram illustrating an embodiment of a method for using a vibration-damping base material for high temperature and a vibration-damping sheet for high temperature of the present invention, in which the vibration-damping sheet for high temperature of the present invention is disposed on a thin sheet, and the vibration-damping base material for high temperature is heated to damp vibrations:
(a) illustrates a step of preparing a vibration-damping sheet for high temperature, and peeling off an exfoliate paper; and
(b) illustrates a step of adhesively bonding the vibration-damping sheet for high temperature to a thin sheet.

### DETAILED DESCRIPTION OF THE INVENTION

A vibration-damping composition for high temperature of the present invention includes a heat-fusion resin containing a first polymer, a tackifier, and a filler.

The first polymer has a melting point of a normal temperature (20 to 40°C) or more. To be specific, the first polymer is polyethylene and/or an ethylene copolymer.

Examples of the polyethylene include a low density polyethylene (for example, a specific gravity of 0.91 to 0.93), a medium density polyethylene (for example, a specific gravity of 0.93 to 0.94), and a high density polyethylene (for example, a specific gravity of 0.94 to 0.96). In view of adhesiveness and workability, a low density polyethylene and a medium density polyethylene are preferable.

The ethylene copolymer is a thermoplastic resin composed of a copolymer of ethylene and a monomer that is copolymerizable with ethylene, and examples thereof include an ethylene-vinyl acetate copolymer (EVA) and an ethylene-(meth)acrylic acid alkyl ester copolymer.

The ethylene-vinyl acetate copolymer is, for example, a random or block copolymer of ethylene and vinyl acetate, or preferably the random copolymer.

Such an ethylene-vinyl acetate copolymer has a vinyl acetate content (in accordance with MDP method, the same applies in the following) of, for example, 12 to 50 wt%, or preferably 14 to 46 wt%; a melt flow rate (MFR: in accordance with JIS K6730, hereinafter, simply called MFR) of, for example, 1 to 30 g/10 min, or preferably 1 to 20 g/10 min; a hardness (JIS K7215) of, for example, 60 to 100, or preferably 70 to 100 degrees; and a softening temperature of, for example, 35 to 70°C, or preferably 35 to 60°C.

The ethylene-(meth)acrylic acid alkyl ester copolymer is, for example, a random or block copolymer of ethylene and (meth)acrylic acid alkyl ester, or preferably the random copolymer.

The (meth)acrylic acid alkyl ester is alkyl esters of methacrylic acid and/or alkyl esters of acrylic acid. To be more specific, examples thereof include alkyl (the alkyl moiety is a linear or branched alkyl group having 1 to 18 carbon atoms) esters of (meth)acrylic acid such as methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, and octadecyl (meth)acrylate. These alkyl esters of (meth)acrylic acid may be used singly, or may be used in combination.

Preferable examples are an ethylene-ethyl acrylate copolymer (EEA) and an ethylene-butyl acrylate copolymer (EBA).

The ethylene-ethyl acrylate copolymer has an ethyl acrylate content (EA content, MDP method) of, for example, 9 to 35% by mass, or preferably 9 to 30% by mass; a MFR of, for example, 0.5 to 25 g/10 min, or preferably 0.5 to 20 g/10 min; a hardness (Shore A, JIS K7215 (1986)) of, for example, 60 to 100 degrees, or preferably 70 to 100 degrees; a softening temperature (Vicat, JIS K7206 (1999)) of, for example, 35 to 70°C, or preferably 35 to 60°C; and a glass transition temperature (DVE method) of, for example, -40°C to -20°C.

The ethylene-butyl acrylate copolymer has a butyl acrylate content (BA content, Du Pont method) of, for example, 7 to 35% by mass, or preferably 15 to 30% by mass; a MFR of, for example, 1 to 6 g/10 min, or preferably 1 to 4 g/10 min; a hardness (Shore A, ISO 868, or JIS K7215) of, for example, 75 to 100 degrees, or preferably 80 to 95 degrees; and a softening temperature (Vicat softening temperature, JIS K7206, or ISO 306) of, for example, 35 to 70°C, or preferably 35 to 60°C.

These first polymers may be used singly, or may be used in combination of two or more.

A preferable example of the first polymer is EVA.

The melting point of the first polymer is, to be specific, the melting point of the first polymer obtained based on the measurement method in accordance with JIS K7121 or ISO 3146 of, for example, 45 to 100°C, or preferably 60 to 95°C.

By mixing such a first polymer in the heat-fusion resin, the melting point of the heat-fusion resin can be set within a desired temperature range (to be specific, 50 to 130°C).

The tackifier is mixed for the purpose of adjusting adhesiveness of the heat-fusion resin, and examples thereof include a rosin resin, a terpene resin (for example, terpene-aromatic liquid resin, etc.), a coumarone-indene resin (coumarone resin), a petroleum resin (for example, C5 petroleum resin, C9 petroleum resin, C5/C9 petroleum resin, C5/C6 petroleum resin, etc.), and a phenol resin. These tackifiers may be used singly, or may be used in combination of two or more.

The softening temperature of the tackifier is such that the temperature difference between the melting point of the first polymer and the softening temperature of the tackifier is, for example, 100°C or less, or preferably 80°C or less. To be specific, the softening temperature of the tackifier is, for example, higher than the melting point of the first polymer. To be more specific, the softening temperature of the tackifier is a temperature that exceeds the melting point of the first polymer and not more than a temperature that is higher than the melting point of the first polymer by 100°C, or preferably a temperature that exceeds the melting point of the first polymer and not more than a temperature that is higher than the melting point of the first polymer by 80°C.

To be specific, the softening temperature of the tackifier is, although it depends on the kind, mixing ratio, and melting point of the first polymer, for example, 50 to 200°C, or preferably 60 to 150°C.

When the temperature difference between the melting point of the first polymer and the softening temperature of the tackifier exceeds the above-described range, there may be a case where the heat adhesion cannot be performed at a desired temperature.

The mixing ratio of the tackifier is, for example, 1 to 200 parts by weight, or preferably 5 to 100 parts by weight in view of reinforcing characteristics and heat-fusion characteristics (adhesiveness) relative to 100 parts by weight of the first polymer, or to 100 parts by weight of the total of the first polymer and the second polymer (described later).

The filler is mixed for the purpose of adjusting flow characteristics of the heat-fusion resin. The filler is, for example, a reinforcing agent. To be more specific, examples of the filler include calcium carbonate (for example, calcium carbonate heavy, calcium carbonate light, and Hakuenka® (colloidal calcium carbonate)), talc, mica, clay, mica powder, bentonite (including Organite), silica, alumina, aluminum silicate, titanium oxide, carbon black, acetylene black, aluminum powder, and glass powder (powder). These fillers may be used singly, or may be used in combination.

The mixing ratio of the filler is, for example, 1 to 150 parts by weight, or preferably 10 to 100 parts by weight in view of reinforcing characteristics, weight (a lighter weight), and economic aspects, relative to 100 parts by weight of the first polymer.

Furthermore, the vibration-damping composition for high temperature of the present invention may also contain a second polymer in order to adjust the temperature range that develops the vibration-damping characteristics.

The second polymer has a glass transition temperature of equal to or less than the melting point of the first polymer, and examples thereof include 3,4-polyisoprene; a copolymer of 3,4-polyisoprene and styrene; butyl rubber; polyisobutylene (PIB); styrene-butadiene rubber (SBR); and nitrile rubber (NBR).

The second polymer is preferably a copolymer of 3,4-polyisoprene and styrene; butyl rubber; or SBR.

The copolymer of 3,4-polyisoprene and styrene is a random or block copolymer of 3,4-polyisoprene and styrene. In the copolymer, 3,4-polyisoprene is a polymer of isoprene, and has isopropenyl ethylene as a repeating unit in its molecule.

The copolymer of 3,4-polyisoprene and styrene has a styrene content of, for example, 10 to 25 wt%, or preferably 12 to 20 wt%; and a MFR of, for example, 0.1 to 10 g/10 min, or preferably 0.5 to 5 g/10 min.

Butyl rubber is a synthetic rubber obtained by random or block copolymerization of isobutene (isobutylene) with isoprene.

The butyl rubber has a degree of unsaturation of, for example, 0.8 to 2.2, or preferably 1.0 to 2.0; and a Mooney viscosity (JIS K 6300-1 (2001)) of, for example, 25 to 90 (ML₁₊₈, at 125°C), or preferably 30 to 60 (ML₁₊₈, at 125°C).

The styrene-butadiene rubber (SBR) is a synthetic rubber obtained by random or block copolymerization of styrene with butadiene.

The SBR has a styrene content of, for example, 18 wt% or more, or preferably 25 to 70 wt%; and a Mooney viscosity of (JIS K 6300-1 (2001)) of, for example, 30 to 150 (ML₅₊₄, at 100°C), or preferably 40 to 100 (ML₅₊₄, at 100°C) or less.

The glass transition temperature of the second polymer is such that the temperature difference between the melting point of the first polymer and the glass transition temperature of the second polymer is, for example, 30°C or more. To be specific, the glass transition temperature of the second polymer is, for example, lower than the melting point of the first polymer, for example, by 30°C or more.

To be more specific, the glass transition temperature of the second polymer is, for example, -50 to 70°C, or preferably -30 to 50°C.

When the temperature difference between the melting point of the first polymer and the glass transition temperature of the second polymer is smaller than the above-described range, there may be a case where effects of shifting the peak of the loss factor (described later) based on the mixing of the second polymer cannot be developed.

These second polymers may be used singly, or may be used in combination of two or more.

When two or more second polymers are used in combination, as long as the temperature difference between the glass transition temperature of at least one of the second polymer and the melting point of the first polymer is 30°C or more, the temperature difference between the glass transition temperature of the other of the second polymer and the melting point of the first polymer may be below 30°C. When the temperature difference between the glass transition temperature of at least one of the second polymer and the melting point of the first polymer is 30°C or more, vibration-damping characteristics of a vibration-damping composition for high temperature under a wide temperature range can be achieved.

Furthermore, when two or more second polymers are used in combination, and when the temperature difference between the glass transition temperature of one of the second polymer and the melting point of the first polymer is equal to or more than 100°C, the temperature difference between the glass transition temperature of the other of the second polymer and the melting point of the first polymer is set to, preferably, in the range of 30°C or more to below 100°C. In this way, insufficient vibration-damping properties in such a temperature range due to an excessively large (wide) temperature difference (gap) between the melting point of the first polymer and the glass transition temperature of the second polymer can be prevented.

The mixing ratio of the second polymer is, for example, 20 to 70 parts by weight, or preferably 30 to 60 parts by weight relative to 100 parts by weight of the total of the first polymer and the second polymer.

When the mixing ratio of the second polymer is below the above-described range, vibration-damping characteristics of the vibration-damping composition for high temperature may not be improved sufficiently under a wide temperature range. When the mixing ratio of the second polymer exceeds the above-described range, vibration-damping characteristics of the vibration-damping composition for high temperature may not be improved sufficiently under high temperature.

By allowing the heat-fusion resin to contain such a second polymer, the peak temperature of the loss factor of the heat-fusion resin can be shifted, for example, to a low temperature side.

In addition to the above-described components, the heat-fusion resin may contain, as necessary, for example, known additives such as a thixotropic agent (for example, monmorillite, etc), a lubricant (for example, stearic acid, etc.), a pigment, an antiscorch agent, a stabilizer, a softener, a plasticizer, an age resister, an antioxidant, a ultraviolet absorber, a coloring agent, an antifungal agent, and a fire retardant; and a cross-linking agent such as peroxide at an appropriate ratio.

To prepare the heat-fusion resin, the above-described components are mixed at the above-described mixing ratio, and blended homogenously. The heat-fusion resin can be prepared by kneading the above-described components using, for example, a mixing roll, a pressure kneader, or an extruder.

The heat-fusion resin has the maximum vibration-damping characteristics at a temperature around the above-described melting point of the first polymer, specifically, within the temperature range from the melting point of the first polymer to a temperature higher than the melting point of the first polymer by 30°C, or preferably, within the temperature range from the melting point of the first polymer to a temperature higher than the melting point of the first polymer by 20°C.

To be specific, the heat-fusion resin has vibration-damping characteristics within the temperature range from the melting point of the first polymer to the glass transition temperature of the second polymer.

To be more specific, the heat-fusion resin has vibration-damping characteristics within the temperature range of, for example, 30 to 130°C, preferably 40 to 120°C, or more preferably 50 to 100°C.

The heat-fusion resin as described above "has vibration-damping characteristics" is defined as follows: the loss factor, which is a vibration-damping characteristic of the heat-fusion resin in the above-described temperature range (for example, 30 to 130°C) evaluated in Examples to be described later, is, for example, 0.05 or more, preferably 0.08 or more, or more preferably 0.10 or more, and usually 0.5 or less. When the loss factor of the heat-fusion resin is below the above-described range, vibration-damping effects may not be developed sufficiently.

Meanwhile, vibration-damping characteristics of the heat-fusion resin around a normal temperature, that is, to be specific, within the temperature range of 20 to 40°C, or preferably 20 to 30°C, may be lower than the vibration-damping characteristics at around the above-described melting point (high temperature).

That is, the vibration-damping characteristics may be temperature dependent, i.e., the peak of the loss factor of the heat-fusion resin may be at around the melting point, or a high temperature side, while the loss factor at around a normal temperature may be at a foot of the peak of the high temperature side.

The vibration-damping composition for high temperature composed of the heat-fusion resin can be thus obtained.

The vibration-damping composition for high temperature achieves a lightweight, while achieving more improved vibration-damping characteristics under high temperature (for example, 30 to 130°C).

Next, descriptions are given of a vibration-damping base material for high temperature obtained by molding the vibration-damping composition for high temperature of the present invention into a sheet; and a vibration-damping sheet for high temperature including the vibration-damping base material for high temperature.

The vibration-damping sheet for high temperature includes a vibration-damping base material for high temperature obtained by forming the above-described vibration-damping composition for high temperature into a sheet; and a constraining layer laminated onto one side of the vibration-damping base material for high temperature.

To form the vibration-damping base material for high temperature, for example, the vibration-damping composition for high temperature is formed into a sheet by a molding method such as calendering, extrusion molding, or press molding at 50 to 150°C.

The vibration-damping base material for high temperature thus formed has a thickness of, for example, 0.2 to 3.0 mm, or preferably 0.5 to 2.5 mm.

The constraining layer is for constraining the vibration-damping base material for high temperature that is fused by heat to retain the shape of the vibration-damping base material for high temperature after the heating, and for providing tenacity for the vibration-damping base material for high temperature to improve strength. The constraining layer is in a sheet form, lightweight, and a thin film, and is formed of a material that is capable of being brought into close contact with and integrated with the vibration-damping base material for high temperature. Examples of such a material include glass fiber cloth, metal foil, synthetic resin unwoven cloth, and carbon fiber.

Glass fiber cloth is cloth made of glass fiber, and known glass fiber cloth is used. The glass fiber cloth includes resin-impregnated glass fiber cloth. The resin-impregnated glass fiber cloth is the above-described glass fiber cloth impregnated with a synthetic resin such as a thermosetting resin or a thermoplastic resin, and known resin-impregnated glass fiber cloth is used. Examples of the thermosetting resin include an epoxy resin, a urethane resin, a melamine resin, and a phenol resin. Examples of the thermoplastic resin include a vinyl acetate resin, an ethylene-vinyl acetate copolymer (EVA), a vinyl chloride resin, and an EVA-vinyl chloride resin copolymer. The above-described thermosetting resin and thermoplastic resin may be used singly or in combination, and the thermosetting resin and the thermoplastic resin (for example, melamine resin and vinyl acetate resin) can be mixed together.

Examples of the metal foil include known metal foil such as aluminum foil and steel foil.

Among these constraining layers, glass fiber cloth is preferably used in view of weight, adhesion, strength, and costs.

The constraining layer has a thickness of, for example, 50 µm to 2 mm. In particular, when glass fiber cloth is used as the constraining layer, the thickness is preferably 300 µm or less, and when metal foil is used as the constraining layer, in view of handleability, the thickness is 100 µm or less.

The vibration-damping sheet for high temperature of the present invention can be obtained by laminating the above-described vibration-damping base material for high temperature and constraining layer. The thickness of the vibration-damping base material for high temperature and the constraining layer in total is, for example, 0.3 to 5 mm, or preferably 0.6 to 3.5 mm.

As necessary, in the obtained vibration-damping sheet for high temperature, a separator (exfoliate paper) may be laminated to the front face (the face opposite to the face (reverse face) to which the constraining layer is laminate) of the vibration-damping base material for high temperature, until the sheet is actually used.

The vibration-damping sheet for high temperature of the present invention is used for damping vibrations of a thin sheet.

The thin sheet is not particularly limited, as long as the thin sheet requires vibration-damping, and examples thereof include a thin sheet that is used in various industrial products. Materials that form such a thin sheet is not particularly limited, and examples thereof include metal and resin (include FRP and synthetic resin). Specific examples of such a thin sheet include steel plates and outer plates for automobiles. Examples of the thin sheet also include steel plates for electrical instruments and household electrical appliances; to be more specific, steel plates for an interior of a housing of computers, computer displays, televisions, game consoles, refrigerators, and vacuum cleaners.

FIG 1 is a diagram illustrating an embodiment of a method for using a vibration-damping base material for high temperature and a vibration-damping sheet for high temperature of the present invention, in which the vibration-damping sheet for high temperature of the present invention is adhesively bonded to a thin sheet for damping vibrations.

Next, with reference to FIG. 1, descriptions are given of an embodiment of the method for using the vibration-damping base material for high temperature and the vibration-damping sheet for high temperature of the present invention, in which the vibration-damping sheet for high temperature of the present invention is adhesively bonded to a thin sheet for damping vibrations.

First, in this method, as shown in FIG. 1 (a), a vibration-damping sheet for high temperature 1 is prepared.

In the vibration-damping sheet for high temperature 1, as described above, a vibration-damping base material for high temperature 2 and a constraining layer 3 are laminated, and as necessary, an exfoliate paper 6 is laminated to the front face of the vibration-damping base material for high temperature 2 (the face opposite to the face (reverse face) to which the constraining layer 3 is laminated).

Then, in this method, the vibration-damping sheet for high temperature 1 is disposed on a thin sheet 5.

The thin sheet 5 is used for the above-described various industrial products, and has, for example, an outer face that is visible, and an inner face that faces inward and is not visible.

To dispose the vibration-damping sheet for high temperature 1 on the thin sheet 5, as indicated by the phantom line in FIG. 1 (a), first, the exfoliate paper 6 is peeled off from the surface of the vibration-damping base material for high temperature 2, and then, as shown in FIG. 1 (b), the surface of the vibration-damping base material for high temperature 2 is bonded (temporary attachment or temporary fixation) to the inner face of the thin sheet 5.

Thereafter, the vibration-damping sheet for high temperature 1 is heated. The heating temperature is a temperature higher than the melting point of the first polymer, for example, a temperature higher by 30°C, or preferably a temperature higher by 20°C than the melting point of the heat-fusion resin. To be specific, the heating temperature is, for example, 80 to 120°C.

At the same time with the heating, or after the heating, a pressure may be applied to the vibration-damping sheet for high temperature 1, for example, to such an extent that does not allow the heat-fusion resin to flow out from the bonded position, or to be specific, a pressure of 0.15 to 10 MPa, with a press.

In this way, the above-described heating allows the heat-fusion resin of the vibration-damping base material for high temperature 2 to be fused by heat, and this allows the vibration-damping base material for high temperature 2 to be adhesively bonded closely to the thin sheet 5 and the constraining layer 3.

Then, when the thin sheet 5, to which the vibration-damping sheet for high temperature 1 is adhesively bonded, is heated to a temperature around the melting point of the heat-fusion resin (high temperature), the vibration-damping base material for high temperature 2 can efficiently absorb vibration energy in the thin sheet 5 by phase transformation of the heat-fusion resin (dissolution) in the vibration-damping base material for high temperature 2. Therefore, vibration-damping characteristics of the thin sheet 5 at high temperature can be further improved.

To be more specific, vibration-damping characteristics of the thin sheet 5 at a temperature range of 30 to 130°C, or preferably 40 to 120°C can be improved.

### Examples

Hereinafter, while the present invention is described in further detail with reference to Examples and Comparative Example, the present invention is not limited to them by no means.

### Examples 1 to 4 and Comparative Example 1

### (Preparation of Vibration-Damping Composition for High Temperature)

A vibration-damping composition for high temperature composed of a heat-fusion resin was prepared by mixing the components on parts-by-weight basis according to the mixing formulation shown in Table 1, and kneading the components with a mixing roll.

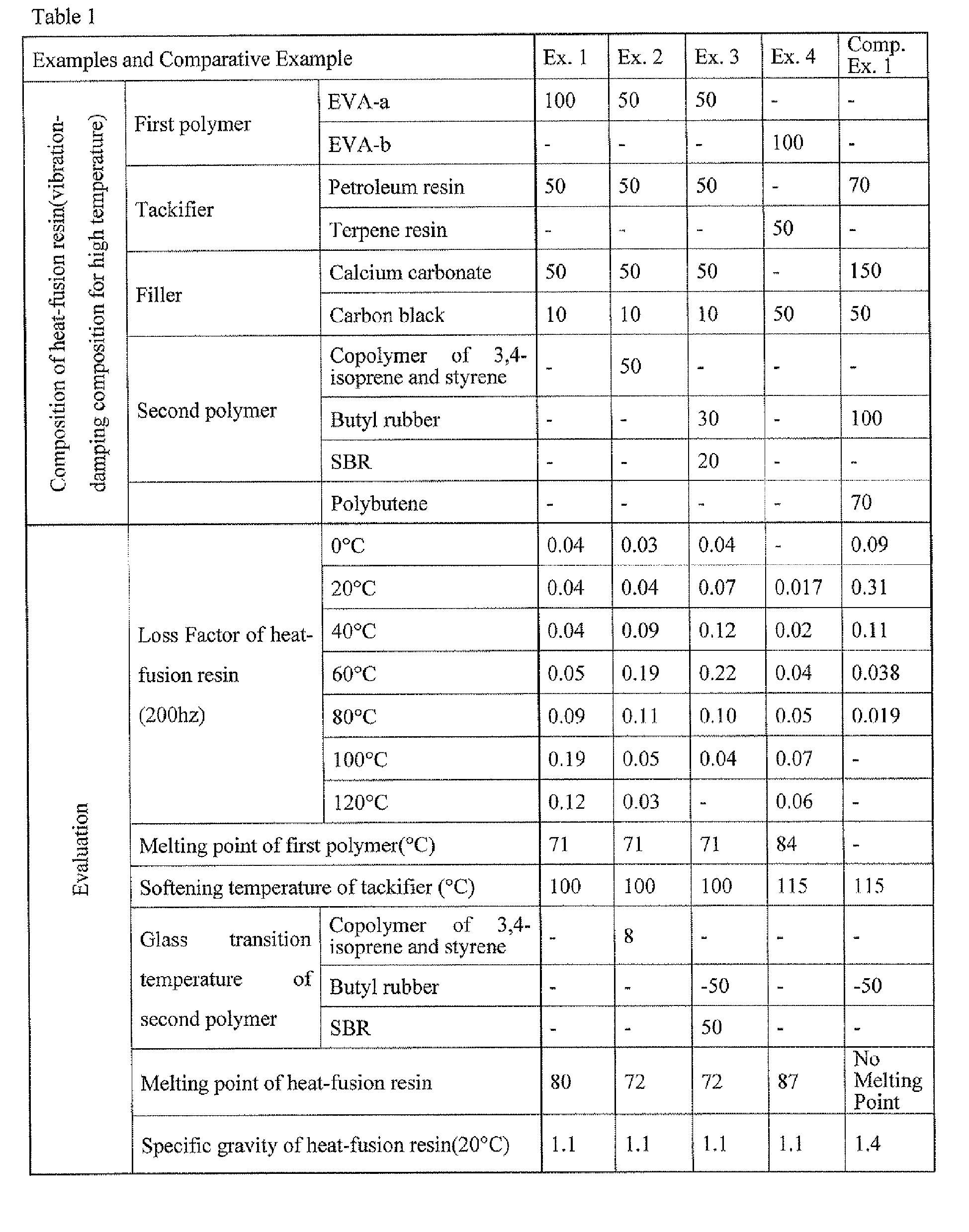

Details of the components or their abbreviations in Table 1 are shown below.
EVA-a: ethylene-vinyl acetate copolymer (EVA): vinyl acetate content 28 wt%, MFR 15 g/10 min, hardness 79, softening temperature 39°C, melting point 71°C
EVA-b: ethylene-vinyl acetate copolymer (EVA), vinyl acetate content 19 wt%, MFR 2.5 g/10 min, hardness 90, softening temperature 58°C, melting point 84°C
Terpene Resin: terpene resin (terpene-aromatic liquid resin), softening temperature 115°C Petroleum Resin: C5/C9 petroleum resin, softening temperature 100°C
Copolymer of 3,4-isoprene and Styrene: styrene content 20 wt%, MFR 5 g/10 min, glass transition temperature 8°C
Butyl Rubber: degree of unsaturation 1.7, Mooney viscosity 50 (ML₁₊₈, at 125°C), glass transition temperature -50°C
Styrene-Butadiene Rubber: styrene content 65 wt%, Mooney viscosity 60 (ML₅₊₄, at 100°C), glass transition temperature 50°C
Polybutene: number average molecular weight 1400

### (Production of Vibration-Damping Base material for High Temperature)

Then, a vibration-damping base material for high temperature having a thickness of 1.8 mm was made by press molding the prepared vibration-damping composition for high temperature into a sheet at a pressing temperature of 110°C, and a pressing pressure of 2 MPa.

### (Production of Vibration-Damping Sheet for High Temperature)

A vibration-damping sheet for high temperature having a thickness of 2.0 mm was made by laminating glass fiber cloth having a thickness of 0.2 mm as the constraining layer onto the vibration-damping base material for high temperature thus made (ref: FIG. 1 (a)).

### (Evaluation)

### 1) Specific Gravity of Heat-Fusion Resin

The specific gravity at 20°C of the heat-fusion resin of Examples and Comparative Example was measured by the immersion method. The results are shown in Table 1.

### 2) Vibration-Damping Characteristics (Loss Factor)

The vibration-damping sheet for high temperature obtained in Examples and Comparative Example was cut into a size of 10 × 250 mm, and the sheet was disposed on one side of a cold-rolled steel plate having a size of 0.8 × 10 × 250 mm, and these were heated at 110°C for 20 minutes so that the vibration-damping base material for high temperature in the vibration-damping sheet for high temperature was bonded to the thin sheet, thereby obtaining a test sample.

Thereafter, the loss factor associated with the second resonance point at temperatures of 0°C, 20°C, 40°C, 60°C, 80°C, 100°C, and 120°C of the test samples of Examples 1 and 2 was measured by the center excitation method.

For the test sample of Example 3, the loss factor associated with the second resonance point at temperatures of 0°C, 20°C, 40°C, 60°C, 80°C, and 100°C was measured by the center excitation method. For the test sample of Example 4, the loss factor associated with the second resonance point at temperatures of 20°C, 40°C, 60°C, 80°C, and 100°C was measured by the center excitation method. For the test sample of Comparative Example 1, the loss factor associated with the second resonance point at temperatures of 0°C, 20°C, 40°C, 60°C, and 80°C was measured by the center excitation method.

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

## Claims

1. A vibration-damping composition for high temperature comprising a heat-fusion resin,
the heat-fusion resin containing a first polymer having a melting point of a normal temperature or more, a tackifier, and a filler,
wherein the heat-fusion resin has vibration-damping characteristics at a temperature around its melting point.

2. The vibration-damping composition for high temperature according to Claim 1, wherein the first polymer is polyethylene and/or an ethylene copolymer.

3. The vibration-damping composition for high temperature according to Claim 1, wherein a temperature difference between the melting point of the first polymer and the softening temperature of the tackifier is 100°C or less.

4. The vibration-damping composition for high temperature according to Claim 1, wherein the heat-fusion resin further contains a second polymer having a glass transition temperature that is equal to or less than the melting point of the first polymer, and
the heat-fusion resin has vibration-damping characteristics within a temperature range from the melting point of the first polymer to the glass transition temperature of the second polymer.

5. The vibration-damping composition for high temperature according to Claim 4, wherein a temperature difference between the melting point of the first polymer and the glass transition temperature of the second polymer is 30°C or more.

6. A vibration-damping base material for high temperature obtained by molding a vibration-damping composition for high temperature into a sheet,
wherein the vibration-damping composition for high temperature comprises a heat-fusion resin containing a first polymer having a melting point of a normal temperature or more, a tackifier, and a filler, and
the heat-fusion resin has vibration-damping characteristics at a temperature around its melting point.

7. A vibration-damping sheet for high temperature comprising:
a vibration-damping base material for high temperature obtained by molding a vibration-damping composition for high temperature into a sheet; and
a constraining layer that is laminated onto one side of the vibration-damping base material for high temperature,
wherein the vibration-damping composition for high temperature comprises a heat-fusion resin containing a first polymer having a melting point of a normal temperature or more, a tackifier, and a filler, and
the heat-fusion resin has vibration-damping characteristics at a temperature around its melting point.

8. A method for using a vibration-damping base material for high temperature, the method comprising:
heating the vibration-damping base material for high temperature to the melting point of a heat-fusion resin or more so as to adhesively bond the vibration-damping base material for high temperature to a thin sheet,
wherein the vibration-damping base material for high temperature is obtained by molding a vibration-damping composition for high temperature into a sheet,
the vibration-damping composition for high temperature comprises a heat-fusion resin containing a first polymer having a melting point of a normal temperature or more, a tackifier, and a filler, and
the heat-fusion resin has vibration-damping characteristics at a temperature around its melting point.

9. A method for using a vibration-damping sheet for high temperature, the method comprising:
heating the vibration-damping sheet for high temperature to the melting point of a heat-fusion resin or more so as to adhesively bond the vibration-damping sheet for high temperature to a thin sheet,
wherein the vibration-damping sheet for high temperature comprises a vibration-damping base material for high temperature and a constraining layer that is laminated onto one side of the vibration-damping base material for high temperature,
the vibration-damping base material for high temperature is obtained by molding a vibration-damping composition for high temperature into a sheet, and
the vibration-damping composition for high temperature comprises a heat-fusion resin containing a first polymer having a melting point of a normal temperature or more, a tackifier, and a filler, and
the heat-fusion resin has vibration-damping characteristics at a temperature around its melting point.
